# EUROPEAN PATENT SPECIFICATION

(11) **EP 1 826 548 B1**
(45) Date of publication and mention of the grant of the patent: **28.10.2009**
(21) Application number: 07290215.8
(22) Date of filing: 20.02.2007
(51) Int. Cl.: G01N 1/28

(54) **Fast microbiological analysis device and method**
Mikrobiologisches Schnellanalysegerät und -verfahren
Dispositif et procédé d'analyse microbiologique rapide

(30) Priority: 24.02.2006 FR 0650646
(43) Date of publication of application: 29.08.2007
(73) Proprietor: MILLIPORE CORPORATION, Billerica Massachusetts 01821 (US)
(72) Inventor: Grinon, Raphaël, 68150 Ribeauville (FR); Olivier, Stéphane, 67560 Rosheim (FR)
(74) Representative: Santarelli

(56) References cited:
- EP-A- 0 025 350
- EP-A- 0 529 084
- EP-A- 0 974 827
- US-A- 3 940 250
- US-A1- 2003 096 322
- US-A1- 2005 153 387

## Description

The present invention relates to a fast microbiological analysis device and method.

At present, checking the microbiological quality of liquids, gases or surfaces in the context of industrial and medical activities has to conform to strict standards.

Because of this, industry and health and safety authorities must have access to tools for detecting microbiological contamination as quickly as possible in order to be able to apply remedies in good time and at least cost.

In practice, microbiological monitoring is carried out on a gel medium on which microorganisms that have been collected on a microporous membrane are cultured until they become visible to the naked eye.

Incubation times vary from one microorganism to another but are generally at least 24 hours and sometimes longer for slower growing microorganisms (for example mycobacteria) or because the microorganisms have been stressed by their environmental conditions.

One way to speed up detection is to reduce the minimum culture time (or even to eliminate it completely in the case of certain microorganisms) by basing the detection of microorganisms on their metabolic activity.

A universal metabolic marker, usually adenosine triphosphate (ATP), contained in living microorganisms is measured by bringing it into contact with a bioluminescence reagent for revealing the presence of ATP by luminescence, so that the presence of microorganisms can be detected without having to wait for colonies to form on a gel medium and to become visible to the naked eye.

The quantity of light emitted is a function of the mass of ATP and therefore of the number of microorganisms.

There is already known in the art the applicant's Milliflex^{®} fast microbiological detector device, which includes:
- a station in which a volume of liquid is filtered through a membrane in order to capture on the filter membrane any microorganisms contained in that liquid;
- a station for spraying an agent adapted to render the ATP of those microorganisms accessible and a reagent for revealing the presence of ATP by luminescence, facing which the operator places the membrane after the filtration step in order for the reagents to be deposited successively; and
- a station for measuring the quantity of light emitted in response to depositing the reagent for revealing the presence of ATP by luminescence, facing which the operator places the membrane after the spraying step, light emitted by the membrane being collected by a CCD camera and treated and then analyzed to detect the presence of microorganisms on the membrane.

US 3,940,250 on which is based the preambule of claim 1 discloses another fast microbiological detector device comprising a spraying station and a measuring station for films rolled at both sides.

The invention aims to provide a device of the same type that is compact and fast and offers high performance.

To this end it proposes a device for fast microbiological analysis of a microporous support having two opposite faces adapted to retain microorganisms, including:
- means for holding said support in a predetermined position in which a first face of said opposite faces of said support is at a first predetermined location and a second face of said opposite faces of said support is at a second predetermined location;
- a station for spraying onto said support a reagent for revealing the presence of ATP by luminescence, said station facing said first location; and
- a station for measuring said luminescence facing said second location;
characterized in that said station for spraying and said station for measuring face each other;
whereby said device is suitable for analyzing supports when said luminescence is emitted at least on the side opposite that onto which said reagent is sprayed.

Because light is emitted by the support on the side that faces the measuring station, the measuring station and the spraying station are each located optimally for fulfilling their respective functions simultaneously.

Thus the measuring station is placed as close as possible to the support to collect as much of the emitted light as possible without being impeded by the spraying station and without impeding spraying.

According to features of the invention that are preferred for reasons of simplicity and convenience of manufacture and use:
- said spraying station is aligned with said first location;
- said measuring station is aligned with said second location;
- said holding means include a plate having an orifice at its center;
- said plate includes an annular flange around said orifice;
- said measuring station includes a photomultiplier and a closure member;
- said closure member includes a thin opaque plate mobile between a position in which it is away from said photomultiplier and a position in which it isolates said photomultiplier from light;
- said spraying station includes a spray nozzle;
- said device further includes a microorganism lysis station;
- said lysis station includes a microwave enclosure and a magnetron;
- said microwave enclosure is of parallelepiped shape;
- said enclosure includes a first enclosure body, a second enclosure body and a clamp to which said first and second enclosure bodies are joined;
- said enclosure has a window in said clamp between said first and second enclosure bodies.
- said window opens onto said spraying station and said measuring station;
- said holding means are adapted to move said support from said predetermined position to a position in which said support is inside said lysis station;
- said holding means are connected by a belt to a motor; and/or
- said reagent is based on luciferin-luciferase.

A second aspect of the invention consists in a method of fast microbiological analysis of a support liable to contain microorganisms, characterized in that it includes:
- the step of procuring a device of the above kind;
- the step of placing said support at said predetermined location;
- the step of spraying said reagent onto said support; and
- simultaneously with said spraying step, the step of measuring the quantity of light emitted in response to said reagent.

The configuration of the device with the spraying station opposite the measuring station means that the spraying and measuring steps can be effected simultaneously and optimally during the course of the method.

According to features that are preferred for reasons of simplicity and convenience of manufacture and use, a microporous membrane is selected as the support.

The features and advantages of the invention will emerge from the following description, which is given by way of preferred but nonlimiting example and with reference to the appended drawings, in which:
- figure 1 is a perspective view of a fast microbiological analysis device showing a mobile carriage of the device in a position in which it receives a filter unit;
- figure 2 is a perspective view to a larger scale than figure 1 of this device in section on a vertical plane centered on the path of the carriage;
- figures 3 and 4 are two views similar to figure 2 but respectively showing the mobile carriage at first and second positions for processing a membrane of the filter unit;
- figures 5 and 6 are two perspective views in section at different angles and to a larger scale than figure 3;
- figure 7 is a timing diagram showing, with a common time scale (the abscissa axis) and a common percentage scale (the ordinate axis), how, when the membrane that includes the filtration unit is heated to a temperature of 90°C, the rate of remanent activity of a reagent previously deposited onto the membrane and the rate of lysis of first and second types of microorganism present on the membrane vary as a function of time;
- figure 8 is a timing diagram showing, with a common time scale (the abscissa axis), the relative quantity of light emitted by the membrane and its immediate surroundings before, during and after the deposition of a reagent for revealing the presence of ATP by luminescence and the quantity of light that would have been emitted without depositing the reagent;
- figure 9 is a timing diagram similar to those of figure 8 but showing in isolation the quantity of light emitted only as a result of bringing the reagent for revealing the presence of ATP by luminescence into contact with the microorganisms on the membrane;
- figure 10 is a block diagram of the device, showing in particular a microcomputer of the device;
- figure 11 is a flowchart showing the operations effected by the microcomputer on data supplied by a photomultiplier of the device; and
- figure 12 is a timing diagram showing, with a common time scale (the abscissa axis), how the quantity of light emitted by the membrane and its immediate surroundings varies, for different initial amounts of unwanted ATP, before, during and after the deposition of the reagent for revealing the presence of ATP by luminescence.

The rapid analysis device 1 of a filter unit 15 includes a sprayer station 2, a lysis station 3 and a light measurement station 4.

The spraying station 2 and the measuring station 4 face each other and the lysis station 3 is in the vicinity of the stations 2 and 4.

The spraying station 2 includes a spraying nozzle 21 connected by a pipe 22 to a flask, not shown.

The spraying nozzle 21 has a conical head 25 and is fixed by means of a plate 23 to a frame of the device (not shown).

The flask to which the pipe 22 is connected contains a reagent for revealing the presence of ATP by luminescence based on water, a luciferin-luciferase complex and magnesium. The flask carries an RFID chip holding information relating to the reagent, such as the initial volume of reagent contained in the flask, the expiry date of the reagent or the number of cycles that can be carried out using the remaining volume of reagent in the flask.

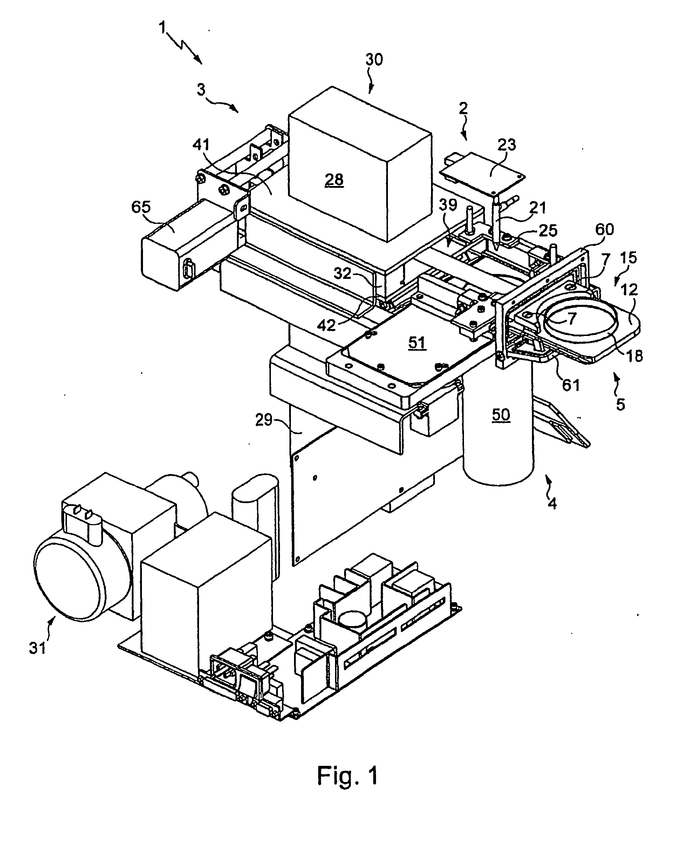

The lysis station 3 includes an enclosure 30 of generally parallelepipedal shape and a magnetron 31 (represented in figure 1 with its electronic control panel) connected by a coaxial cable (not shown) to an antenna (not visible) inside the enclosure 30.

Like the plate 23 of the nozzle 21, the magnetron 31 and its control panel are mounted on the frame of the device (not shown).

The enclosure 30 has an upper enclosure body 28, a lower enclosure body 29 and a U-section clamp 32.

Each enclosure body is of generally parallelepipedal shape and has an open face.

The enclosure body 28 (respectively 29) has around its open face a rectangular contour flange 41 (respectively 42) connected transversely to the remainder of the enclosure body.

The U-shaped clamp 32 has two large branches 43 connected together by a transverse small branch 45.

In the assembled state, each flange 41, 42 cooperates with the branches of the clamp 32 so that the open faces of the enclosure bodies 28 and 29 are disposed face to face.

The enclosure bodies 28, 29 and the clamp 32 of the enclosure 30 have dimensions such that the magnetron 31 produces standing waves in the cavity delimited by the enclosure 30.

In the assembled state, the space on the side of the enclosure opposite the branch 45, between the branches 43 and between the flanges 41 and 42 is open in the direction towards the spraying station 2 and the measuring station 4 by virtue of a window 39.

In the vicinity of the window 39 there is a flap 68 for blocking off this window to isolate the spraying station 2 and the measuring station 4 from electromagnetic interference generated by the magnetron 31.

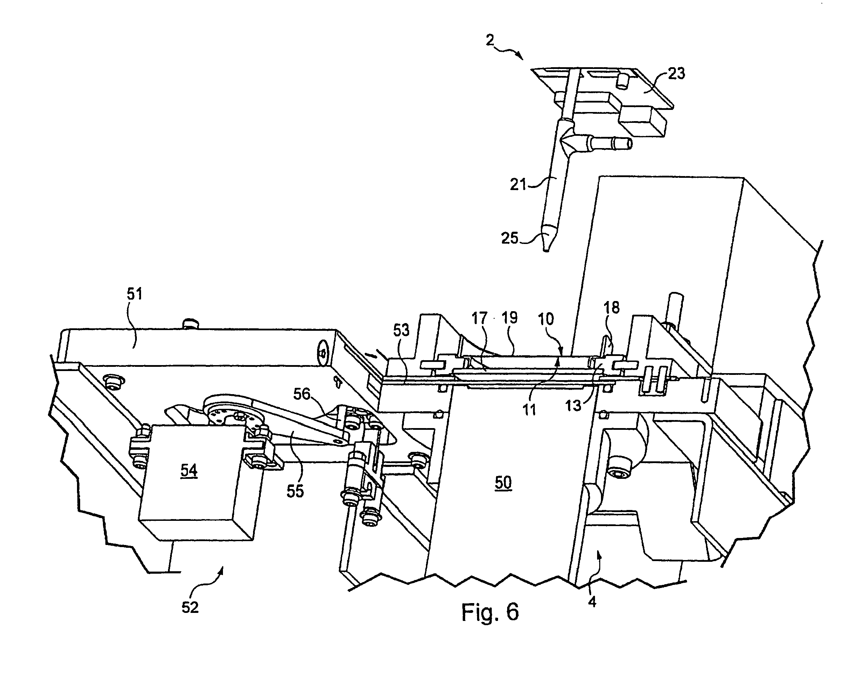

The measuring station 4 includes a photomultiplier 50 passing through a table 51 and a closure member 52 (figure 6).

The photomultiplier 50 is an Electron Tubes^{®} 9266B photomultiplier.

The closure member 52 is shown in detail in figure 6 and includes an opaque plate 53, a rod 56, a crank 55 and a motor 54.

The plate 53 is mobile and accommodated in a cavity formed in the table 51 and connected by the rod 56 to the crank 55.

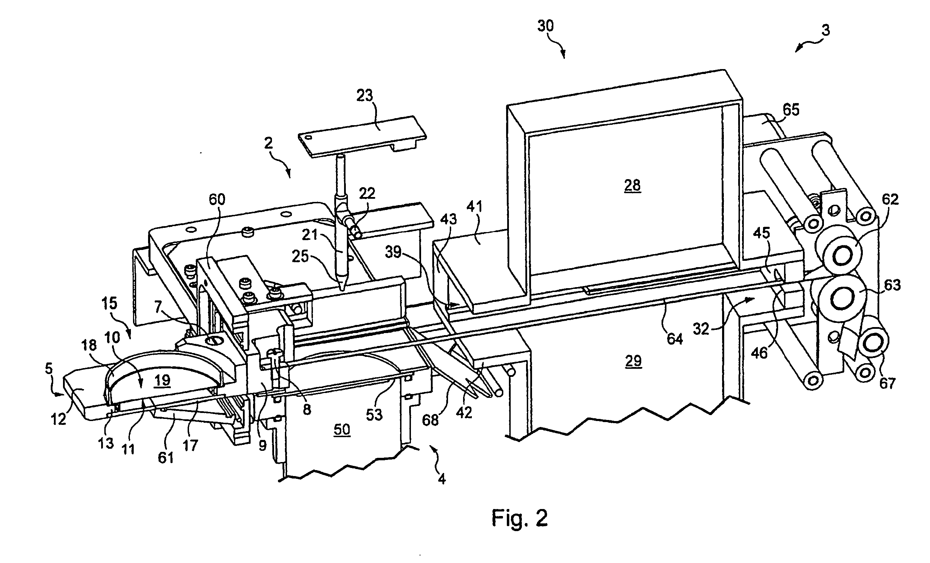

The device 1 also includes a carriage 5 having a plate 12 and a rim 9 (figures 2 to 4). The plate 12 is fixed to the rim 9 by two screws 7 (figure 1).

A cylindrical orifice in the plate 12 opens onto each side of the plate.

This orifice is flanked by an annular flange 13 recessed relative to each side of the plate 12.

The recess on the side of the plate 12 that faces the photomultiplier 50 houses a glass window 17.

The filter unit 15 includes a body 18 around a microporous membrane 19 having two opposite faces 10 and 11.

The rim 9 on the carriage 5 is connected by a belt 64 fixed to the rim by a screw 8 and by a set of pulleys 62, 63 and 67 to a motor 65 (figures 1 and 2) situated outside the enclosure 30 in the vicinity of the branch 45 of the clamp 32.

As well as being adapted to be wound onto a pulley, the belt 64 has a curved section imparting to it a bending resistance enabling it to transmit a thrust force.

The belt 64 crosses the enclosure 30 by means of the window 39 and an oblong hole 46 formed in the small branch 45 of the clamp 32 (figures 2 to 4).

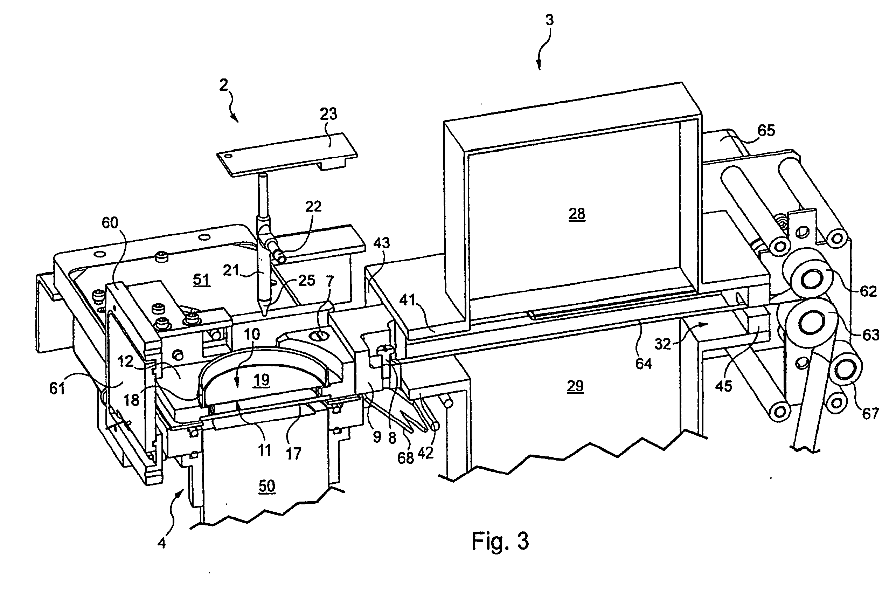

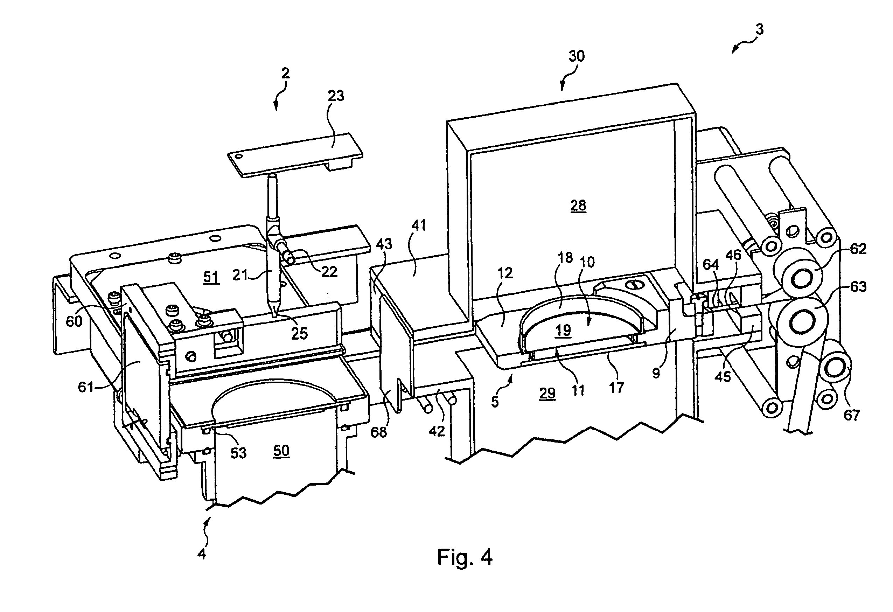

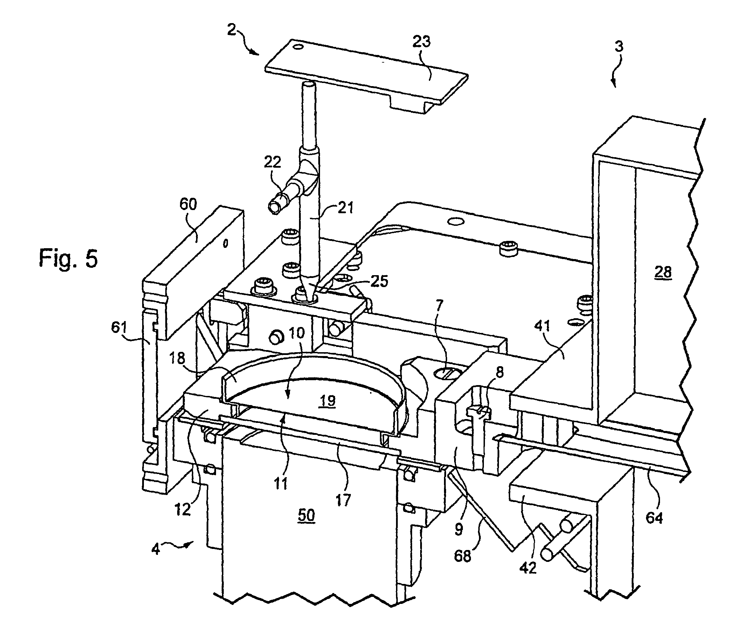

The carriage 5 is fixed to the belt to move the carriage between a receiving position (figures 1 and 2), a first processing position (figures 3, 5 and 6) and a second processing position (figure 4).

The device 1 also includes on the side opposite the motor 65 a window 60 and a cap 61 adapted to render the window 60 light-tight when it is closed.

In the receiving position, with the cap 61 open, the plate 12 projects from the device through the window 60.

In the first processing position, the carriage 5 is between the nozzle 21 and the photomultiplier 50 with the result that, in this position, the spraying station 2 faces and is aligned with the face 10 of the membrane 19, whereas the measuring station 4 faces and is aligned with the face 11 of the membrane through the window 17.

The belt 64 passes completely through the enclosure 30 in the receiving position and in the first processing position.

In the second processing position, the carriage 5 is inside the enclosure 30 of the lysis station 3 so that the membrane 19 is entirely inside this enclosure and the rim 9 is between the flanges 41 and 42.

Sensors at the various processing stations monitor the operating state of the device, in particular an RFID reader/writer beside the flask containing the reagent, a plurality of carriage position sensors and a plurality of temperature sensors (for the photomultiplier and the magnetron, for example).

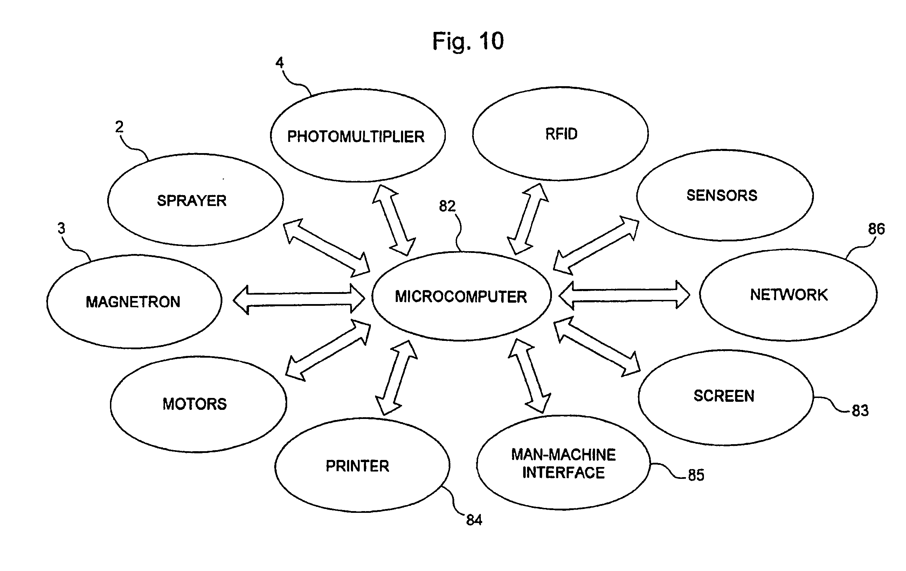

The spraying station 2, the lysis station 3, the measuring station 4, the motors 54 and 65 and the various sensors are connected to a microcomputer 82, as shown in the figure 10 block diagram.

The microcomputer 82 is adapted in particular to execute instructions for launching or stopping an analysis cycle, to receive instructions from an operator via a man-machine interface 85 and to store data coming from the photomultiplier in a memory. The microcomputer 82 is also adapted to display on a screen 83 and/or to print out via a label printer 84 information intended for the operator (for example the progress of the current cycle, the number of cycles still available in the flask, the result of preceding analyses, and various device alarm and maintenance reports).

The operation of the device 1 is described next.

Before carrying out an analysis cycle, the operator collects any microorganisms that may be present in a liquid or a gas or on a surface on the microporous membrane 19 of the filter unit 15.

After selecting the appropriate plate 12 for cooperating with the body 18 of the filter unit and screwing it onto the rim 9, the operator then places the filter unit 15 on the mobile carriage 5 (which at this time is in the receiving position represented in figures 1 and 2), centering it relative to the flange 13, the lower edge of the body 18 of the unit 15 then resting on this flange.

Using a man-machine interface, the operator then commands the launching of a membrane analysis cycle.

In particular, the operator chooses from three different cycles, namely a cycle with no preprocessing, a "manual" preprocessing cycle and an automatic preprocessing cycle.

The various steps of the manual preprocessing cycle are described next.

Initially, the control module runs the motor 65 to turn the pulleys 62, 63 and 67 to move the mobile carriage 5 in translation.

This moves the carriage from its receiving position to its first processing position (figure 3) between the spraying module 2 and the measuring module 4. During this movement, when the whole of the carriage 5 has passed through the window 60, the cap 61 of the device, which is spring-loaded, closes and subsequent steps are carried out in an enclosed and dark environment.

In the first processing position, the station 2 sprays a predetermined volume of reagent. The spraying nozzle 21 is designed to deposit microdroplets of the reagent homogeneously and regularly over the whole of the membrane 19. Spraying microdroplets divides the volume of liquid deposited sufficiently to avoid any risk of dilution.

The reagent is therefore brought into contact with unwanted ATP on the membrane coming not from the microorganisms that it retains but from external contamination, for example during transportation or filtration.

Bringing the reagent into contact with the unwanted ATP causes a chemical reaction that generates light and consumes the unwanted ATP. The unwanted ATP consumed in this way will not interfere with subsequent steps of the analysis cycle.

The reagent does not interact with the ATP of the microorganisms, which at this stage of the cycle is still protected from the reagent by the cell walls of the microorganisms.

When the reagent has been sprayed, the control module runs the motor 65 to move the mobile carriage 5 into the enclosure 30 through the window 39 to take up the second processing position inside the microwave cavity of the lysis station 3.

When the carriage 5 is introduced into the enclosure 30, the flap 68, which is spring-loaded, closes to isolate the enclosure 30 from the remainder of the device and to minimize electromagnetic interference caused by the emission of microwaves.

The magnetron 31 then emits a single-wave field so that an incident wave propagates in the microwave cavity formed by the enclosure 30. Standing waves are established in the enclosure (as a result of reflection of the incident wave by the surfaces of the enclosure 30).

The portions of the flanges 41 and 42 situated in the vicinity of the window 39 and the opening 46 also help to minimize the leakage of magnetic field through these openings.

Excited by the microwave field, the polarized molecules (in particular the water contained in the membrane after filtration and/or resulting from the first spraying of the reagent) heat the membrane 19 to a temperature of about 90°C.

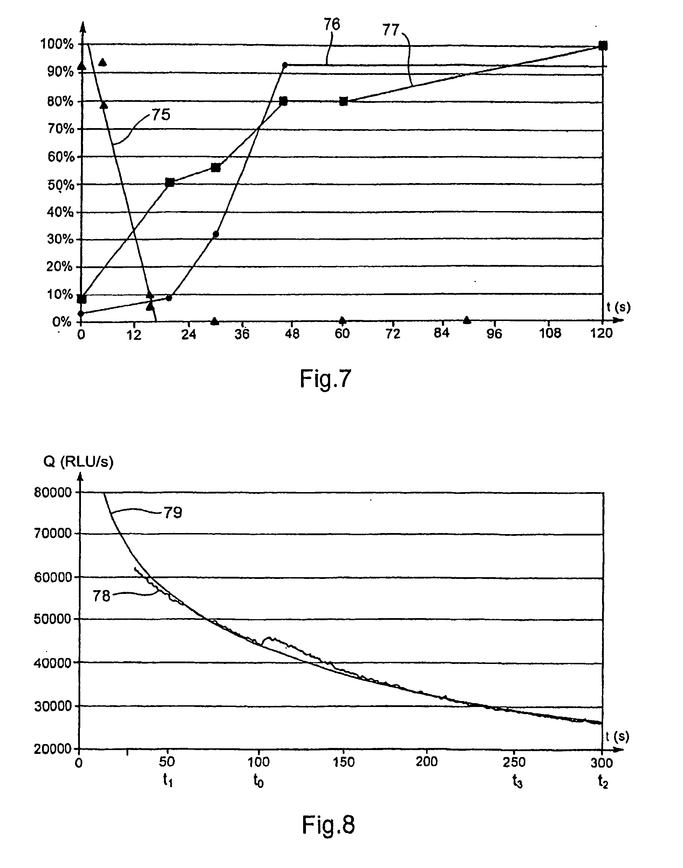

At that temperature, the reagent on the membrane is rapidly eliminated, as shown by the curve 75 in figure 7, which represents as a function of time the proportion of reagent still active (remanent activity level).

After 6 seconds of exposure to this temperature, 20% of the reagent has been eliminated, after 15 seconds 90% of the reagent has been eliminated and after 17 seconds all of the reagent has been eliminated.

The lysis kinetics of the microorganisms are slower at this temperature. The curves 76 and 77 in figure 7 represent the percentage of microorganisms having undergone lysis as a function of time and for two types of microorganism (saccharomyces cerevisae in the case of the curve 76 and cryptococcus in the case of the curve 77). Note that only a small quantity of microorganisms has undergone lysis by the time at which all of the reagent has been eliminated.

Thus the cell walls of most of the microorganisms have not undergone lysis (and the ATP of the microorganisms have therefore not been rendered accessible) by the time the reagent previously deposited has been eliminated. Thus the major portion of the ATP of the microorganisms is not consumed by the reagent.

What is more, elimination of the reagent is accelerated because the increase in temperature leads to partial drying of the membrane 19 making the heat more effective at eliminating the reagent.

Microwave heating represents an input of only the necessary quantity of energy, which is a function of the quantity of water present on the membrane, without producing residual heat that could interfere with subsequent process steps.

After this heating step, the ATP of the microorganisms that have undergone lysis is accessible to be analyzed. The motor 65 is then run to move the carriage 5 out of the enclosure 30 and return it to the first processing position, after which the motor 54 of the closure member 52 of the measuring station is run to turn the crank 55 and move the opaque plate 53 to a position away from the photomultiplier 50 (figure 3).

The photomultiplier then measures the quantity of light that it receives through the window 17 emitted by the materials situated in the "field of view" of the photomultiplier (here the membrane 19 and its immediate surroundings).

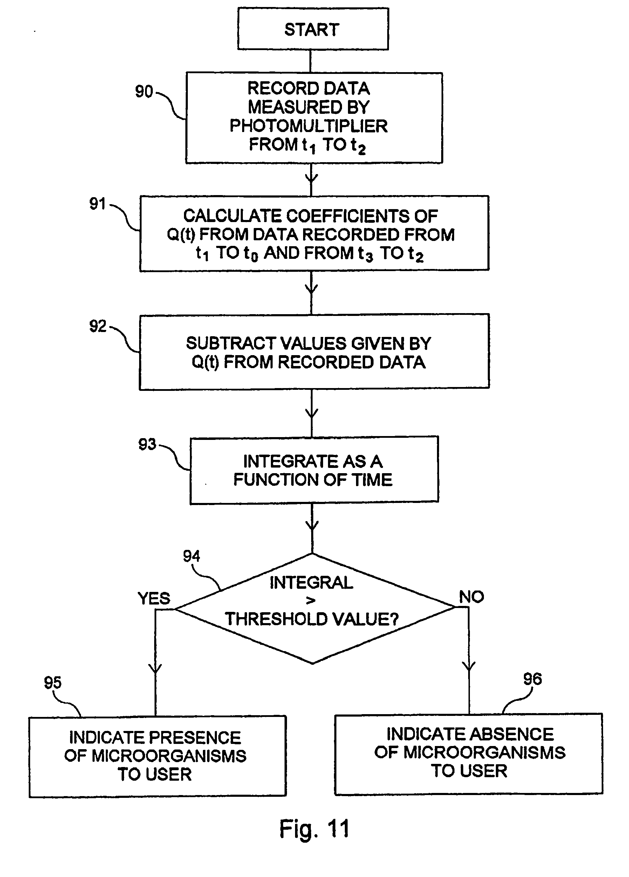

The operations carried out by the microcomputer when the closure member has been opened are described next with reference to the figure 11 flowchart.

In the operation 90, from a time t₁ (here 30 s) to a time t₂ (here 300 s), the microcomputer records the measurement data transmitted by the photomultiplier.

At a time t₀ after t₁ and before t₂ (figure 8), the spraying station 2 effects a second regular and homogeneous deposition of microdroplets of the reagent contained in the flask over the whole of the membrane 19, while the recording of the quantity of light continues.

Light is emitted from both sides of the membrane 19 and the plate 12 because of the small thickness of the membrane and the orifice formed in the plate 12 for this purpose.

The quantity of light recorded in relative light units (RLU) as a function of time is indicated by the curve 78 in figure 8, which shows that the quantity of light decreases regularly and logarithmically to the time to corresponding to the time at which the reagent is sprayed onto the membrane.

This decreasing phase corresponds to the de-excitation by natural phosphorescent emission of photons by the material situated in the field of view of the photomultiplier.

Beyond the time t₀ there occurs an abrupt transition in the emission of light because of the reagent coming into contact with the ATP of the microorganisms that has been rendered accessible by the lysis step.

After this abrupt transition, the quantity of light again decreases logarithmically.

Using the recorded data, the microcomputer performs the operation 91 and extrapolates as a function of time the quantity of light that would have been emitted if the reagent had not been deposited on the membrane.

In the present example, this operation is based on the data recorded from t₁ (50 s) to t₀ (100 s) and from data recorded from t₃ = t₀ + x to t₂ (300 s), where x is chosen so that t₃ is sufficiently far away from t₀ for it to be considered that beyond t₃ the influence of adding the reagent becomes negligible (here t₃ = 250 s). The microcomputer deduces from the recorded data the coefficients of a logarithmic function varying globally from t₁ to t₀ and from t₃ to t₂ as the quantity of light represented by the curve 78.

In the present example, this function is Q(t) = -16518.ln(t) + 120334 and is represented by the curve 79 in figure 8; here the coefficient of correlation between the recorded data and the data from the extrapolated function is 0.09994 in the time intervals [t₁, t₀] and [t₃, t₂].

The curves 78 and 79 are significantly different during a time interval whose lower limit is the time t₀ (100 s) at which the reagent was sprayed (here the interval [100 s, 150 s]).

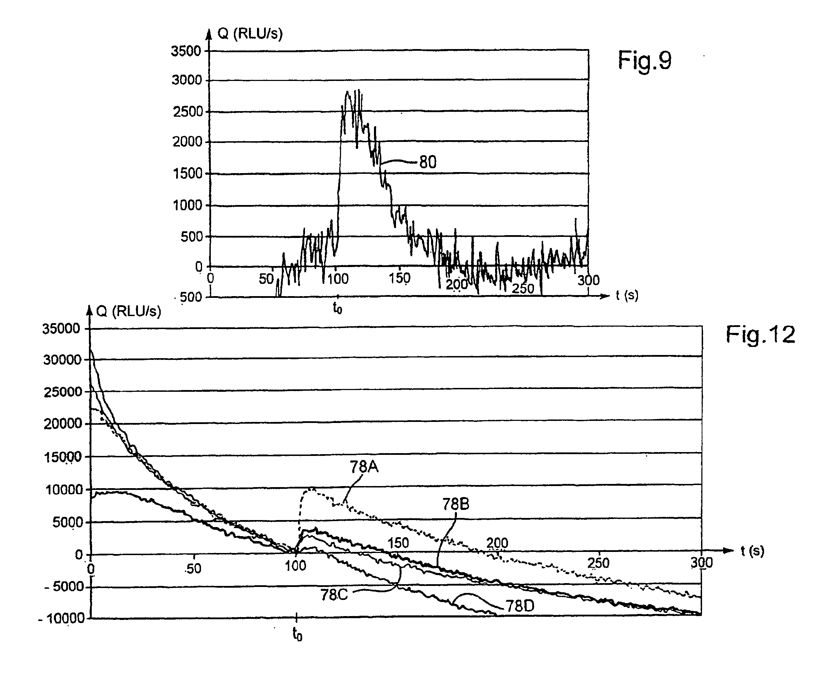

By means of the operation 92, the microcomputer then determines from the recorded and extrapolated quantities of light respectively represented by the curves 78 and 79 a set of values as a function of time representative of the quantity of light coming only from the ATP of the microorganisms coming into contact with the reagent. That set of values is represented by the curve 80 in figure 9.

In the present example, for each time from t₁ to t₂ at which a quantity of light value has been recorded, the microcomputer calculates the difference between that value and the value for the same time given by the extrapolation function Q(t).

This point-by-point subtraction digitally filters unwanted luminous background noise ("decreasing white") to obtain the set of values corresponding to the quantity of light coming only from the ATP of the microorganisms.

Filtering the background noise eliminates the effects of the storage conditions (the influence of which is important for the emission of natural light), the nature of the product deposited or filtered on the membrane (emitting light itself depending its composition), and the experimental analysis conditions (light-tightness, thermal interference, efficiency of the photomultiplier).

The quantity of light filtered in this way is then integrated from time t₁ to time t₂ (operation 93) and a test (94) compares the results of this integration to a threshold corresponding to the microorganism detection sensitivity required by the user.

Among other things, the value of this threshold is chosen as a function of the type of microorganism to be detected, as the mass of ATP contained in the microorganisms can vary significantly from one type of microorganism to another.

If the result of this integration is above the threshold value, the ATP giving rise to this light is deemed to be caused by the presence of microorganisms on the membrane.

Conversely, if the result of this integration is below the threshold value, ATP is deemed not to be present in sufficient quantities to consider that microorganisms are present (or present in sufficiently large quantities) on the membrane.

The microcomputer then displays the appropriate information on the screen of the device by carrying out either the operation 95 or the operation 96, as a function of the result of the test 94.

Once the analysis has been carried out the control module moves the carriage 5 from the first processing position to the receiving position, in which the operator can remove the filter unit 15 that has been analyzed and replace it with the next unit to be analyzed.

The disposition of the measuring station 4 and the spraying station 2 relative to the membrane 19 in the first processing position means that the photomultiplier 50 is as close as possible to the membrane 19 and disposed transversely to it, without being impeded by the spraying station and without impeding the spraying station. This arrangement collects the maximum light and therefore optimizes the detection sensitivity of the photomultiplier.

Moreover, using a closure member having a thin opaque plate and a remote opening and closing mechanism further reduces the distance between the photomultiplier 50 and the membrane 19 and thus increases detection sensitivity.

The configuration of the device, the preprocessing step and the data processing of the recorded light signal make the detection device highly sensitive.

A device of the above kind can detect the presence of only around ten femtograms of ATP.

This sensitivity means that a wide variety of microorganisms can be detected and the presence of a single microorganism on the membrane can be detected without incubation.

The preprocessing steps carried out in the case of an automatic cycle are described next.

The automatic analysis cycle ensures that all the unwanted ATP has been consumed.

In figure 12, which represents the quantities of light recorded before and after depositing a reagent at the time to for various quantities of unwanted ATP that have not been consumed (170 fg in the case of the curve 78A, 66 fg in the case of the curve 78B, 52 fg in the case of the curve 78C and 18 fg in the case of the curve 78D), the unwanted ATP that has not been consumed may be present in large quantities and cause an erroneous analysis (detection of "false positives": the presence of microorganisms is detected although the membrane does not contain any).

It is therefore beneficial to provide the user with a cycle which confirms that the preprocessing step has consumed all of the unwanted ATP.

Before effecting the lysis of the microorganisms, with the carriage 5 in the first processing position and at the same time as spraying the reagent, the closure member 52 is opened in order for the photomultiplier 50 to measure continuously the quantity of light emitted by the membrane and its immediate surroundings during the spraying step. The microcomputer compares this measurement to a predetermined threshold value and spraying of the reagent continues for as long as the quantity of light measured by the photomultiplier is above that threshold.

When the quantity of light measured falls below the threshold, the unconsumed mass of unwanted ATP still present on the membrane is deemed to have become negligible and spraying is stopped. The carriage is then moved to the second processing position to continue the analysis cycle.

In a variant, instead of integrating all of the values corresponding to the quantity of light represented by the curve 80, the microcomputer can select the maximum value from that set and compare it to a predetermined threshold value.

A further variant is for the membrane to be heated by infrared means.

A further variant is for the step of thermolysis to be replaced by a step of spraying a reagent either achieving chemical lysis of the microorganisms or rendering the membrane permeable to the microorganisms in order to make the ATP that they contain accessible to the reagent for revealing ATP by luminescence that is sprayed subsequently.

A further variant is to use the device to count the microorganisms on the membrane either by substituting a CCD camera for the photomultiplier or by processing and/or analyzing the membrane several times, one elementary region at a time.

## Claims

1. Device for fast microbiological analysis of a microporous support (19) having two opposite faces (10, 11) adapted to retain microorganisms, including:
- means (5) for holding said support (19) in a predetermined position in which a first face (10) of said opposite faces of said support (19) is at a first predetermined location and a second face (11) of said opposite faces of said support (19) is at a second predetermined location;
- a station (2) for spraying onto said support (19) a reagent for revealing the presence of ATP by luminescence, said station (2) facing said first location; and
- a station (4) for measuring said luminescence facing said second location;
**characterized in that** said station for spraying and said station for measuring face each other;
whereby said device is suitable for analyzing supports when said luminescence is emitted at least on the side opposite that onto which said reagent is sprayed.

2. Device according to claim 1, **characterized in that** said spraying station (2) is aligned with said first location.

3. Device according to either claim 1 or claim 2, **characterized in that** said measuring station (4) is aligned with said second location.

4. Device according to any one of claims 1 to 3, **characterized in that** said holding means include a plate (12) having an orifice at its center.

5. Device according to claim 4, **characterized in that** said plate (12) includes an annular flange (13) around said orifice.

6. Device according to any one of claims 1 to 5, **characterized in that** said measuring station includes a photomultiplier (50) and a closure member (52).

7. Device according to claim 6, **characterized in that** said closure member (52) includes a thin opaque plate (53) mobile between a position in which it is away from said photomultiplier (50) and a position in which it isolates said photomultiplier (50) from light.

8. Device according to any one of claims 1 to 7, **characterized in that** said spraying station (2) includes a spray nozzle (21).

9. Device according to any one of claims 1 to 8, **characterized in that** it further includes a microorganism lysis station (3).

10. Device according to claim 9, **characterized in that** said lysis station includes a microwave enclosure (30) and a magnetron (31).

11. Device according to claim 10, **characterized in that** said microwave enclosure (30) is of parallelepiped shape.

12. Device according to claim 11, **characterized in that** said enclosure (30) includes a first enclosure body (28), a second enclosure body (29) and a clamp (32) to which said first and second enclosure bodies are joined.

13. Device according to claim 12, **characterized in that** said enclosure (30) has a window (39) between said first and second enclosure bodies.

14. Device according to claim 13, **characterized in that** said window (39) opens onto said spraying station (2) and said measuring station (4).

15. Device according to any one of claims 9 to 14, **characterized in that** said holding means (5) are adapted to move said support from said predetermined position to a position in which said support (19) is inside said lysis station (3).

16. Device according to claim 15, **characterized in that** said holding means (5) are connected by a belt (64) to a motor (65).

17. Device according to any one of claims 1 to 16, **characterized in that** said reagent is based on luciferin-luciferase.

18. Method of fast microbiological analysis of a support liable to contain microorganisms, **characterized in that** it includes:
- the step of procuring a device according to any one of claims 1 to 17;
- the step of placing said support (19) at said predetermined location;
- the step of spraying said reagent onto said support (19); and
- simultaneously with said spraying step, the step of measuring the quantity of light emitted in response to said reagent.

19. Method according to claim 18, **characterized in that** a microporous membrane (19) is selected as the support.

## Patentansprüche

1. Vorrichtung zur schnellen mikrobiologischen Analyse eines mikroporösen Trägers (19) mit zwei einander gegenüberliegenden Oberflächen (10, 11), die zum Zurückhalten von Mikroorganismen angepasst sind, mit:
einem Mittel (5) zum Halten des Trägers (19) in einer vorgegebenen Position, in der eine erste Oberfläche (10) der einander gegenüberliegenden Oberflächen des Trägers (19) an einem ersten vorgegebenen Ort ist, und wobei eine zweite Oberfläche (11) der einander gegenüberliegenden Oberflächen des Trägers (19) an einem zweiten vorgegebenen Ort ist;
einer Station (2) zum Sprühen eines Reagenz auf den Träger (19) zum Hervorbringen der Anwesenheit von ATP durch Lumineszenz, wobei die Station (2) dem ersten Ort gegenüber liegt; und
einer Station (4) zum Messen der Lumineszenz, die dem zweiten Ort gegenüberliegt;
**dadurch gekennzeichnet, dass** die Station zum Sprühen und die Station zum Messen gegenüberliegen;
wobei die Vorrichtung zur Analyse von Trägern geeignet ist, wenn die Lumineszenz emittiert wird, zumindest auf der Seite gegenüberliegend jener, auf der das Reagenz aufgesprüht wird.

2. Vorrichtung nach Anspruch 1, **dadurch gekennzeichnet, dass** die Sprühstation (2) mit dem ersten Ort ausgerichtet ist.

3. Vorrichtung nach Anspruch 1 oder Anspruch 2, **dadurch gekennzeichnet, dass** die Messstation (4) mit dem zweiten Ort ausgerichtet ist.

4. Vorrichtung nach einem der Ansprüche 1 bis 3, **dadurch gekennzeichnet, dass** das Haltemittel eine Platte (12) umfasst, die eine Öffnung in ihrer Mitte aufweist.

5. Vorrichtung nach Anspruch 4, **dadurch gekennzeichnet, dass** die Platte (12) einen ringförmigen Flansch (11) um die Öffnung aufweist.

6. Vorrichtung nach einem der Ansprüche 1 bis 5, **dadurch gekennzeichnet, dass** die Messstation einen Photomultplier (50) und ein Verschließelement (52) aufweist.

7. Vorrichtung nach Anspruch 6, **dadurch gekennzeichnet, dass** das Verschließelement (52) eine dünne, lichtdichte Platte (53) aufweist, die zwischen einer Position, in der sie entfernt von dem Photomultiplier (50) ist, und einer Position, in der sie den Photomultiplier (50) gegenüber dem Licht abschirmt, bewegbar ist.

8. Vorrichtung nach einem der Ansprüche 1 bis 7, **dadurch gekennzeichnet, dass** die Sprühstation (2) eine Sprühdüse (21) aufweist.

9. Vorrichtung nach einem der Ansprüche 1 bis 8, **dadurch gekennzeichnet, dass** sie des Weiteren eine Lysis- bzw. Lösungsstation (3) für Mikroorganismen aufweist.

10. Vorrichtung nach Anspruch 9, **dadurch gekennzeichnet, dass** die Lysis- bzw. Lösungsstation eine Mikrowellenumhüllung (30) und ein Magnetron (31) aufweist.

11. Vorrichtung nach Anspruch 10, **dadurch gekennzeichnet, dass** die Mikrowellenumhüllung (30) Parallelepipedform hat.

12. Vorrichtung nach Anspruch 11, **dadurch gekennzeichnet, dass** die Umhüllung (30) einen ersten Umhüllungskörper (28), einen zweiten Umhüllungskörper (29) und eine Klammer (32) umfasst, mit der die ersten und zweiten Umhüllungskörper verbunden sind.

13. Vorrichtung nach Anspruch 12, **dadurch gekennzeichnet, dass** die Umhüllung (30) ein Fenster (39) zwischen den ersten und zweiten Umhüllungskörpern aufweist.

14. Vorrichtung nach Anspruch 13, **dadurch gekennzeichnet, dass** das Fenster (39) sich hin zur Sprühstation (2) und der Messstation (4) öffnet.

15. Vorrichtung nach einem der Ansprüche 9 bis 14, **dadurch gekennzeichnet, dass** das Haltemittel (5) ausgestaltet ist, um den Träger von der vorgegebenen Position zu einer Position zu bewegen, in der der Träger (19) innerhalb der Lysis- bzw. Lösungsstation (3) ist.

16. Vorrichtung nach Anspruch 15, **dadurch gekennzeichnet, dass** das Haltemittel (5) mit einem Gurt (64) an einem Motor (65) angebracht ist.

17. Vorrichtung nach einem der Ansprüche 1 bis 16, **dadurch gekennzeichnet, dass** das Reagenz auf Luciferin-Luciferase beruht.

18. Verfahren zur schnellen mikrobiologischen Analyse eines Trägers, der geeignet ist, Mikroorganismen zu enthalten, **dadurch gekennzeichnet, dass** es umfasst:
- den Schritt des Bereitstellens einer Vorrichtung nach einem der Ansprüche 1 bis 17;
- den Schritt des Anordnens des Trägers (19) an dem vorgegebenen Ort;
- den Schritt des Sprühens des Reagenz auf den Träger (19); und
- gleichzeitig mit dem Sprühschritt den Schritt des Messens der Menge von Licht, das in Abhängigkeit von dem Reagenz emittiert wird.

19. Verfahren nach Anspruch 18, **dadurch gekennzeichnet, dass** eine mikroporöse Membran (19) als Träger ausgewählt ist.

## Revendications

1. Dispositif pour l'analyse microbiologique rapide d'un support microporeux (19) présentant deux faces opposées (10, 11), adapté à retenir des micro-organismes, comportant :
- des moyens de maintien (5) dudit support (19) dans une position prédéterminée où une première face (10) desdites faces opposées dudit support (19) est dans un premier emplacement prédéterminé et une seconde face (11) desdites faces opposées dudit support (19) est dans un second emplacement prédéterminé ;
- un poste de pulvérisation (2) sur ledit support (19) d'un réactif révélant la présence d'ATP par luminescence, ledit poste (2) étant disposé en regard dudit premier emplacement ; et
- un poste de mesure (4) de ladite luminescence, disposé en regard dudit second emplacement ;
**caractérisé en ce que** ledit poste de pulvérisation et ledit poste de mesure se font face ;
grâce à quoi ledit dispositif convient pour analyser des supports lorsque ladite luminescence est émise au moins du côté opposé à celui où ledit réactif est pulvérisé.

2. Dispositif selon la revendication 1, **caractérisé en que** ledit poste de pulvérisation (2) est aligné avec ledit premier emplacement.

3. Dispositif selon la revendication 1 ou la revendication 2, **caractérisé en ce que** ledit poste de mesure (4) est aligné avec ledit second emplacement.

4. Dispositif selon l'une quelconque des revendications 1 à 3, **caractérisé en ce que** lesdits moyens de maintien comportent un plateau (12) présentant en son centre un orifice.

5. Dispositif selon la revendication 4, **caractérisé en ce que** ledit plateau (12) comporte une collerette annulaire (13) entourant ledit orifice.

6. Dispositif selon l'une quelconque des revendications 1 à 5, **caractérisé en ce que** ledit poste de mesure comporte un photomultiplicateur (50) et un obturateur (52).

7. Dispositif selon la revendication 6, **caractérisé en ce que** ledit obturateur (52) comporte une plaque fine opaque (53) mobile entre une position où elle est à l'écart dudit photomultiplicateur (50) et une position où elle isole ledit photomultiplicateur (50) de la lumière.

8. Dispositif selon l'une quelconque des revendications 1 à 7, **caractérisé en ce que** ledit poste de pulvérisation (2) comporte une buse de pulvérisation (21).

9. Dispositif selon l'une quelconque des revendications 1 à 8, **caractérisé en ce qu'**il comporte, en outre, un poste de lyse (3) de micro-organismes.

10. Dispositif selon la revendication 9, **caractérisé en ce que** ledit poste de lyse comporte une enceinte micro-ondes (30) et un magnétron (31).

11. Dispositif selon la revendication 10, **caractérisé en ce que** ladite enceinte micro-ondes (30) est de forme parallélépipédique.

12. Dispositif selon la revendication 11, **caractérisé en ce que** ladite enceinte (30) comporte un premier corps d'enceinte (28), un second corps d'enceinte (29) et une bride (32) à laquelle sont reliés lesdits premier et second corps d'enceinte.

13. Dispositif selon la revendication 12, **caractérisé en ce que** ladite enceinte (30) présente, entre lesdits premier et second corps d'enceinte, une fenêtre (39).

14. Dispositif selon la revendication 13, **caractérisé en ce que** ladite fenêtre (39) débouche vers ledit poste de pulvérisation (2) et ledit poste de mesure (4).

15. Dispositif selon l'une quelconque des revendications 9 à 14, **caractérisé en ce que** lesdits moyens de maintien (5) sont aptes à faire passer ledit support de ladite position prédéterminée à une position où ledit support (19) est disposé à l'intérieur dudit poste de lyse (3).

16. Dispositif selon la revendication 15, **caractérisé en ce que** lesdits moyens de maintien (5) sont reliés par un ruban (64) à un moteur (65).

17. Dispositif selon l'une quelconque des revendications 1 à 16, **caractérisé en ce que** ledit réactif est à base de luciférine-luciférase.

18. Procédé d'analyse microbiologique rapide d'un support susceptible de contenir des micro-organismes ; **caractérisé en ce qu'**il comporte :
- l'étape de procuration d'un dispositif selon l'une quelconque des revendications 1 à 17 ;
- l'étape de disposition dudit support (19) audit emplacement prédéterminé ;
- l'étape de pulvérisation sur ledit support (19) dudit réactif ; et
- simultanément à ladite étape de pulvérisation, l'étape de mesure de la quantité de lumière émise en réponse audit réactif.

19. Procédé selon la revendication 18, **caractérisé en ce que** l'on sélectionne comme support une membrane microporeuse (19).
